# FASCICULE DE BREVET EUROPEEN

(11) **EP 4 272 125 B1**
(45) Date de publication et mention de la délivrance du brevet: **27.08.2025**
(21) Numéro de dépôt: 21848183.6
(22) Date de dépôt: 23.12.2021
(51) Int. Cl.: G06N 3/084, G06N 3/045, H04L 25/02, H04L 25/03

(54) **PROCÉDÉS ET DISPOSITIFS POUR GELER OU ADAPTER DES PARAMÈTRES D'UN RÉSEAU DE NEURONES UTILISÉ DANS UN RÉSEAU DE TÉLÉCOMMUNICATIONS**
VERFAHREN UND VORRICHTUNGEN ZUM EINFRIEREN ODER ANPASSEN VON PARAMETERN EINES NEURONALEN NETZES, DIE IN EINEM TELEKOMMUNIKATIONSNETZ VERWENDET WERDEN
METHODS AND DEVICES FOR FREEZING OR ADAPTING PARAMETERS OF A NEURAL NETWORK WHICH ARE USED IN A TELECOMMUNICATION NETWORK

(30) Priorité: 30.12.2020 FR 2014244
(43) Date de publication de la demande: 08.11.2023
(73) Titulaire: Orange, 92130 Issy-les-Moulineaux (FR)
(72) Inventeur: DUFRENE, Louis Adrien, 92326 CHÂTILLON CEDEX (FR); LAMPIN, Quentin, 92326 CHÂTILLON CEDEX (FR); LARUE, Guillaume, 92326 CHÂTILLON CEDEX (FR)
(74) Mandataire: Cabinet Beau de Loménie
(86) Numéro de dépôt international: PCT/FR2021/052448
(87) Numéro de publication internationale: WO 2022/144520

(56) Documents cités:
- LI YANG ET AL: "Convolutional recurrent neural network-based channel equalization: An experimental study", 2017 23RD ASIA-PACIFIC CONFERENCE ON COMMUNICATIONS (APCC), UNIVERSITY OF WESTERN AUSTRALIA, 11 December 2017 (2017-12-11), pages 1 - 6, XP033324834, DOI: 10.23919/APCC.2017.8304090
- MALLYA ARUN ET AL: "Piggyback: Adapting a Single Network to Multiple Tasks by Learning to Mask Weights", 6 October 2018, ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 72 - 88, ISBN: 978-3-642-17318-9, XP047489226
- ISIKDOGAN LEO F ET AL: "SemifreddoNets: Partially Frozen Neural Networks for Efficient Computer Vision Systems", 12 June 2020, ADVANCES IN INTELLIGENT DATA ANALYSIS XIX; [LECTURE NOTES IN COMPUTER SCIENCE; LECT.NOTES COMPUTER], PAGE(S) 193 - 208, ISBN: 978-3-540-35470-3, ISSN: 0302-9743, XP047570419
- BENJAMIN EHRET ET AL: "Continual Learning in Recurrent Neural Networks with Hypernetworks", ARXIV.ORG, CORNELL UNIVERSITY LIBRARY, 201 OLIN LIBRARY CORNELL UNIVERSITY ITHACA, NY 14853, 22 June 2020 (2020-06-22), XP081700126

## Description

### Technique antérieure

L'invention se rapporte au domaine général des télécommunications. Plus précisément, l'invention se rapporte au domaine du traitement de signal à l'aide de réseaux de neurones dans des réseaux de télécommunications.

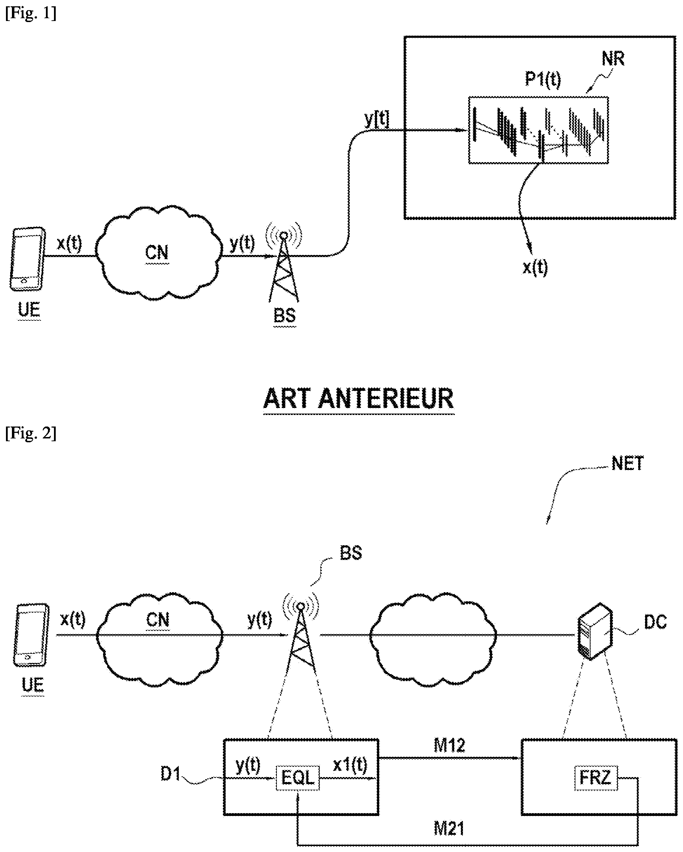

La **figure 1** représente un réseau de communication de l'état de la technique, par exemple un réseau de communication cellulaire, dans lequel un réseau de neurones NR peut être mis en œuvre. Le réseau comporte au moins un équipement terminal mobile UE, connecté via un canal de communication radio CN à un équipement BS de type station de base. Supposons que le terminal UE émette un signal radio x(t) vers la station de base BS, la station de base BS recevra un signal radio y(t) différent du signal émis x(t). En effet, le signal émis x(t) subit des altérations dues à sa propagation sur le canal radio CN.

Pour pallier les effets du canal CN, la station de base met en œuvre une fonction réseau sous la forme d'un réseau de neurones NR pour estimer, à partir du signal reçu y(t), le signal x(t) émis par le terminal UE. À cet effet, le canal radio CN est modélisé en choisissant les fonctions des différents neurones, et en entrainant le réseau de neurones NR pour qu'il détermine les paramètres (poids P et biais) de chaque neurone lors d'une phase d'apprentissage du réseau NR. Par exemple, lors de cette phase, le réseau de neurones NR reçoit une pluralité de signaux y'(t) correspondants respectivement à des signaux émis x'(t) appartenant à un ensemble de séquences connues. Une fois que la phase d'apprentissage est terminée, le réseau de neurones est capable d'estimer un signal émis x(t) pour un nouveau signal reçu y(t).

Une problématique se pose si le canal radio CN évolue au cours du temps, par exemple à cause du déplacement du terminal UE, des conditions climatiques, de l'apparition ou de la disparition d'obstacles à la transmission de signaux sur le canal CN, d'évolution d'un nombre de terminaux connectés à la station de base BS, d'évolution d'interférences d'autres canaux avec le canal CN, etc. Lorsque le canal radio CN évolue, il est nécessaire d'adapter (réapprendre) le réseau de neurones NR pour prendre en compte l'évolution du canal CN et améliorer l'estimation du signal x(t).

L'adaptation du réseau de neurones requiert du temps et des ressources en termes de mémoire et de capacité de calcul. L'adaptation est d'autant plus longue et coûteuse que le modèle de réseau de neurones est complexe. Cependant, dans ce contexte d'utilisation du réseau de neurones dans un réseau de communication, l'adaptation du réseau de neurones doit être rapide à l'échelle du temps de cohérence du canal de communication. De plus, les données utilisées pour l'apprentissage et l'adaptation, par exemple des séquences pilotes, consomment des ressources autrement utilisées pour communiquer. Elles sont donc à utiliser avec parcimonie, et l'adaptation doit pouvoir être réalisée sur de petites quantités de données.

Une solution peut consister à utiliser un réseau de neurones d'architecture moins complexe, pour que son adaptation soit plus rapide, plus facile et moins coûteuse, mais un tel réseau présente une expressivité moins bonne. Une complexité d'un réseau de neurones est par exemple définie en termes de nombre de paramètres, de nombre de neurones, de nombre de couches. On rappelle que l'expressivité du réseau de neurones NR représente sa capacité à approximer la fonction de traitement de signal mise en œuvre, par exemple la fonction d'égalisation. Cette dernière permet de corriger le signal reçu pour en faciliter la démodulation. Cette modification s'effectue en fonction du canal CN. Une expressivité moins bonne affecte donc la fiabilité de l'estimation du signal émis x(t).

Une autre solution peut consister à ne prendre en compte, lors de l'adaptation, que certains paramètres par exemple les poids et/ou les biais d'un nombre limité de neurones, en figeant (gelant) les poids et/ou les biais associés à d'autres neurones. Cette technique est appelée en anglais « weight freeze ». Cette solution n'est pas satisfaisante car elle nécessite de connaître les poids et les biais à figer. Un choix automatique arbitraire de ces poids ou biais ne garantit pas que l'égalisation appliquée au signal reçu y(t) pour estimer le signal émis x(t) soit fiable.

L'intervention d'une personne experte pour configurer des hyper-paramètres du réseau de neurones, tels que les poids et/ou les biais à figer, représente une solution non pratique et lente, notamment lorsque le réseau de neurones est profond, c'est-à-dire ayant un nombre élevé de couches. En effet, si les rôles des différentes couches du réseau de neurones ne sont pas définis clairement (par exemple une couche spécifique pour compenser une rotation ou une couche spécifique pour compenser une atténuation du signal propagé sur le canal), il est difficile voire impossible d'identifier les paramètres qui peuvent être gelés.

On connait encore une autre solution, nommée en anglais « stochastic depth » qui consiste à varier la profondeur du réseau de neurones de manière aléatoire durant la phase d'adaptation. Chaque couche du réseau peut être ignorée avec une certaine probabilité. Cette solution a les mêmes inconvénients que ceux de la solution « weight freeze ». En plus, l'aspect stochastique ne garantit pas une adaptation pertinente du réseau de neurones en fonction de l'évolution du canal. Le document Li Yang et al: "Convolutional recurrent neural network-based channel equalization: An experimental study", 11-12-2017, divulgue un réseau récurrent convolutionnel utilisé pour l'égalisation de canal.

Il existe donc un besoin d'une solution qui permet une adaptation rapide et fiable des paramètres d'un réseau de neurones utilisé dans un réseau de communication, et qui ne présente pas les inconvénients des méthodes de l'état de la technique.

### Exposé de l'invention

L'invention vise un procédé d'adaptation des paramètres d'un premier réseau de neurones utilisé dans un réseau de communication pour mettre en œuvre une fonction de traitement de signal par un équipement, pour traiter un signal en entrée reçu par l'équipement sur un canal de communication afin d'obtenir un signal en sortie, le procédé comportant des étapes de :
- suite à une détection d'une dégradation d'une qualité de ladite fonction de traitement à cause d'une évolution dudit canal, envoi d'informations sur cette évolution pour un traitement par un deuxième réseau de neurones, le deuxième réseau de neurones étant utilisé pour déterminer des paramètres du premier réseau à geler et des paramètres du premier réseau à adapter suite à une évolution du canal ;
- obtention d'informations, fournies par le deuxième réseau de neurones, identifiant des paramètres du premier réseau à geler et des paramètres du premier réseau à adapter suite à l'évolution détectée ; et
- adaptation des paramètres identifiés du premier réseau de neurones en utilisant les informations fournies par le deuxième réseau de neurones.

Corrélativement, l'invention vise un premier dispositif configuré pour adapter, selon le procédé d'adaptation proposé, des paramètres d'un premier réseau de neurones.

Les caractéristiques et avantages du procédé d'adaptation proposé présentés ci-après s'appliquent de la même façon au premier dispositif proposé et vice versa.

On désigne par un paramètre du réseau de neurones, un poids et/ou un biais de ce réseau.

On désigne par « geler » ou « figer » un paramètre, le fait de ne pas prendre compte ce paramètre lors de l'adaptation du réseau. Autrement dit, un paramètre gelé n'est pas adapté et n'est pas changé suite à l'évolution du canal.

Le premier réseau de neurones peut être un réseau profond de type DNN (pour « Deep Neural Network » en anglais), c'est-à-dire qu'il comporte un nombre considérable de couches de neurones pour pouvoir modéliser le canal de communication avec une certaine fiabilité. Le premier réseau de neurones a une expressivité notable.

Dans un mode de réalisation, la fonction de traitement de signal correspond à l'égalisation du canal de communication par une estimation du signal émis par un équipement émetteur sur le canal vers un équipement récepteur (le premier dispositif conforme à l'invention) qui met en œuvre la fonction de traitement. Le signal en entrée correspond au signal reçu par l'équipement récepteur et le signal en sortie correspond alors à l'estimation du signal émis. Dans cet exemple, le premier réseau de neurones modélise la fonction d'égalisation du canal de communication. Il s'agit notamment de compenser les effets de non-linéarité complexes des amplificateurs de puissance ou des effets liés à sa propagation sur le canal, tels qu'un affaiblissement de puissance, une rotation de phase, un masquage et/ou un décalage.

La technique proposée permet de réduire le temps, la mémoire et la capacité de calcul requis pour l'adaptation du premier réseau de neurones, tout en assurant une adaptation optimisée en fonction de l'évolution du canal. En effet, le premier réseau n'a pas besoin d'adapter tous ses paramètres, ni d'identifier arbitrairement les paramètres à geler ou à adapter, ni de requérir une intervention d'une personne experte. Lorsque le premier réseau de neurones obéit strictement au deuxième réseau de neurones, seuls les paramètres identifiés « à adapter » sont adaptés, les autres paramètres étant gelés.

Les paramètres à geler et les paramètres à adapter ne sont pas choisis de façon arbitraire. Au contraire, ces paramètres sont déterminés par le deuxième réseau de neurones de façon à optimiser l'adaptation du premier réseau en fonction de l'évolution du canal.

Comparé aux méthodes de l'état de la technique où les paramètres à geler ou à adapter sont déterminés par une personne experte, la technique proposée présente une solution plus rapide et plus fiable. En effet, ces paramètres sont déterminés par le deuxième réseau de neurones, sans aucune contrainte sur la définition des rôles remplis par les différentes couches du premier réseau de neurones, ou sur la répartition des rôles entre les différentes couches, contrairement à la méthode de l'état de la technique exigeant qu'une couche soit définie exclusivement pour un rôle donné (tel qu'une compensation d'une atténuation de puissance du signal reçu sur le canal, ou une compensation d'une rotation de phase de ce signal) afin que la personne experte puisse identifier les couches, les poids et/ou les biais à geler ou à adapter suite à l'évolution du canal.

Dans un mode de réalisation, la détection d'une dégradation d'une qualité de ladite fonction de traitement à cause d'une évolution du canal comporte une comparaison entre un seuil et une valeur d'une variation d'une caractéristique de propagation d'un signal d'entrée reçu sur ledit canal.

Dans ce mode de réalisation, si la variation de la caractéristique dépasse le seuil, le premier dispositif proposé détecte que le canal a évolué. Cela peut avoir lieu par exemple suite à un déplacement d'un équipement émetteur du signal d'entrée, ou à une connexion d'autres équipements au premier dispositif proposé, ou à une présence d'un nouvel obstacle entre l'équipement émetteur et le premier dispositif proposé.

La caractéristique de propagation du signal peut être une amplitude, une phase ou une latence. En particulier, le premier dispositif proposé peut être un terminal ou une station de base apte à mesurer cette caractéristique.

Suite à l'évolution du canal de communication, il peut être nécessaire d'adapter les paramètres du premier réseau de neurones. En particulier, le premier réseau proposé peut considérer que la qualité de sa fonction de traitement est dégradée dès qu'une évolution du canal est détectée. Le premier dispositif proposé envoie alors les informations sur l'évolution du canal pour un traitement par le deuxième réseau de neurones, qui détermine quels sont les paramètres à geler et quels sont les paramètres à adapter.

Dans un mode de réalisation particulier, le canal est modélisé sous la forme d'un ensemble de trajets représentés par des coefficients complexes. Ce vecteur de coefficients est convolué au signal en entrée pour donner le signal en sortie. L'évolution du canal de propagation est mesurée par une différence de phase et/ou d'amplitude des coefficients complexes du canal.

Dans un mode de réalisation particulier, la détection d'une dégradation d'une qualité de ladite fonction de traitement à cause d'une évolution du canal comporte une comparaison, pour un signal d'entrée donné, entre un signal en sortie obtenu par la fonction de traitement et un signal de référence.

Selon ce mode, le signal de référence correspond à un signal de sortie lorsque la fonction de traitement est appliquée au signal d'entrée et lorsque le premier réseau est optimisé pour le canal de communication. Si la différence entre le signal de sortie et le signal de référence dépasse un certain seuil, le premier dispositif proposé observe une dégradation des performances lors de la mise en œuvre de la fonction de traitement et décide alors qu'une adaptation est requise.

Dans un mode de réalisation particulier, le procédé d'adaptation proposé comprend en outre un envoi, en association avec les informations sur l'évolution du canal, d'au moins un paramètre du premier réseau de neurones parmi un poids et un biais, d'une valeur d'une fonction de perte et/ou d'au moins une composante du gradient de la fonction de perte.

Ce mode permet d'informer le deuxième réseau de neurones de la valeur actuelle de cette caractéristique (paramètre, valeur de la fonction de perte et/ou composante du gradient), notamment lorsque les deux réseaux de neurones sont mis en œuvre par deux dispositifs différents. Nous notons que la fonction de perte est une fonction utilisée par le premier réseau de neurones pour évaluer la qualité de sa fonction de traitement. Le gradient de la fonction de perte est évalué pour fournir une direction vers laquelle les paramètres du premier réseau évoluent afin de diminuer la fonction de perte et donc d'améliorer la qualité de la fonction de traitement, autrement dit d'améliorer la pertinence de l'estimation d'un signal cible x(t).

En particulier, lorsque le deuxième réseau de neurones utilise une approche de rétro propagation du gradient dans sa phase d'apprentissage, le premier réseau de neurones lui envoie la composante du gradient et la valeur du poids ou du biais susceptible d'être adapté.

Dans un mode de réalisation particulier du procédé d'adaptation proposé, les informations sur l'évolution du canal comportent :
- des valeurs de caractéristiques de propagation sur le canal avant l'évolution, pour lesquelles le premier réseau de neurones est optimisé ; et
- des valeurs estimées de ces caractéristiques suite à l'évolution.

Dans un mode de réalisation particulier du procédé d'adaptation proposé, les informations sur l'évolution du canal comportent une différence complexe entre des valeurs de caractéristiques de propagation sur le canal avant l'évolution et des valeurs de ces caractéristiques après l'évolution.

Dans un mode de réalisation particulier, le premier réseau de neurone obéit au deuxième réseau de neurones en appliquant à la lettre les informations fournies par le deuxième réseau.

L'invention vise également un procédé de détermination de paramètres d'un premier réseau de neurones à geler ou à adapter, le premier réseau de neurones étant utilisé dans un réseau de communication pour mettre en œuvre une fonction de traitement de signal par un équipement, pour traiter un signal en entrée reçu sur un canal de communication afin d'obtenir un signal en sortie, le procédé comportant des étapes de :
- apprentissage d'un deuxième réseau de neurones en association avec ledit premier réseau de neurones ;
- obtention d'informations sur une évolution du canal résultant en une dégradation d'une qualité de ladite fonction de traitement ;
- détermination par le deuxième réseau de neurones, à partir des informations obtenues, des paramètres du premier réseau à geler et des paramètres du premier réseau à adapter suite à l'évolution du canal ; et
- fourniture au premier réseau de neurones d'informations identifiant les paramètres à geler et les paramètres à adapter.

Corrélativement, l'invention vise un deuxième dispositif configuré pour déterminer, selon le procédé de détermination proposé, des paramètres d'un premier réseau de neurones à geler ou à adapter.

Les caractéristiques et avantages du procédé de détermination proposé présentés ci-après s'appliquent de la même façon au deuxième dispositif proposé et vice versa.

Les caractéristiques et avantages du procédé d'adaptation (et du premier dispositif) proposé s'appliquent de la même façon au procédé de détermination (et au deuxième dispositif) proposé et vice versa.

Le deuxième réseau de neurones est utilisé dans le réseau de communication en association avec au moins un premier réseau de neurones tel que décrit précédemment. Le deuxième réseau de neurones est utilisé pour déterminer des paramètres du premier réseau à geler et des paramètres du premier réseau à adapter suite à une évolution du canal et une dégradation de la qualité de la fonction de traitement. L'interprétation des informations fournies par le deuxième réseau de neurones est connue par le premier réseau de neurones. On désigne par l'envoi, la réception et/ou l'interprétation d'informations par un réseau de neurones, l'envoi, la réception et/ou l'interprétation de ces informations par le dispositif qui met en œuvre ce réseau de neurones, que ce soit dans une phase d'apprentissage ou d'inférence.

La technique proposée présente une approche fonctionnelle. Le deuxième réseau de neurones est entrainé pour fonctionner avec le premier réseau de neurones. En fonction de l'évolution du canal de communication, le deuxième réseau est en mesure de déterminer à l'avance les paramètres du premier réseau qui doivent être optimisés. Cette anticipation s'effectue par exemple par une estimation prédictive de la valeur du gradient d'une fonction de perte, en supposant que le premier réseau est optimisé pour le canal avant l'évolution ou lors de la précédente phase d'apprentissage du premier réseau. En analysant la nature de l'évolution du canal (telle qu'une rotation, une atténuation ou autre) et en réalisant sa fonction en association avec le premier réseau, le deuxième réseau est en mesure de trouver les paramètres significativement impactés par cette évolution du canal et de les différencier de ceux qui n'ont pas besoin d'être optimisés (adaptés) pour répondre à l'évolution du canal.

Le deuxième réseau de neurones détermine une probabilité qu'un paramètre du premier réseau doit être gelé ou adapté. Le deuxième réseau de neurones se base sur les informations relatives à l'évolution du canal pour déterminer les probabilités.

Dans un mode de réalisation particulier, les informations fournies au premier réseau de neurones comportent les probabilités déterminées pour des paramètres du premier réseau.

Dans un autre mode de réalisation particulier du procédé de détermination, les informations fournies au premier réseau de neurones comportent un tableau de données binaires (en anglais « bitmap ») dont les éléments sont obtenus à partir des probabilités déterminées pour des paramètres du premier réseau. Par exemple les éléments de la liste peuvent être des chiffres zéro (0) pour les paramètres à geler associés à une probabilité strictement inférieure à 0.5 (1/2), et des chiffres un (1) pour des paramètres à adapter associés à une probabilité supérieure ou égale à 0.5 (1/2).

Chacun des premier et deuxième réseaux de neurones peut être entrainé complétement ou partiellement en mode « online », c'est-à-dire en parallèle avec une phase d'inférence de ce réseau, ou en mode « offline », c'est-à-dire avant la phase d'inférence. Chacun de ces réseaux de neurones peut être entraîné à partir de canaux de communications réels ou simulés.

Le premier réseau est entraîné par des signaux d'entrée et des signaux de sortie d'une séquence pilote.

Le deuxième réseau de neurones selon l'invention est entraîné en association avec le premier réseau de neurones. Avant de mettre en œuvre un apprentissage du deuxième réseau de neurones, le premier réseau de neurones est déjà entraîné pour un état initial du canal de communication. Suite à une première détection d'une évolution du canal, le premier réseau est adapté selon une méthode de l'état de la technique. Dans le cadre d'un apprentissage supervisé du deuxième réseau, le premier réseau envoie au deuxième réseau des informations sur l'évolution du canal, ainsi que les paramètres du premier réseau avant et après l'évolution du canal. Le deuxième réseau est entraîné sur la base des informations sur l'évolution et des paramètres du premier réseau.

Il est possible que l'apprentissage (entraînement) du deuxième réseau de neurones requière des informations sur plusieurs évolutions du canal et des paramètres du premier réseau avant et après ces évolutions, jusqu'à ce que le deuxième réseau de neurones soit optimisé. Dans un mode de réalisation, au moins une première partie de la phase d'apprentissage du deuxième réseau est effectuée en mode hors ligne (offline). En particulier, toute la phase d'apprentissage du deuxième réseau peut être effectuée en mode hors ligne. Des métriques sont utilisées pour déterminer si le deuxième réseau est optimisé et que son entrainement est terminé.

Suite à une détection ultérieure d'une évolution du canal, le premier réseau envoie au deuxième réseau des informations sur l'évolution du canal. Le deuxième réseau déjà entraîné est apte à déterminer les paramètres du premier réseau à adapter et les paramètres du premier réseau à geler pour une optimisation rapide du premier réseau en fonction de l'évolution du canal.

Dans le cadre d'un apprentissage par renforcement (« reinforcement learning » en anglais) du deuxième réseau de neurones :
- le premier réseau de neurones envoie au deuxième réseau des caractéristiques du canal avant et après une évolution du canal, le premier réseau étant déjà entraîné pour les caractéristiques du canal avant l'évolution ;
- le deuxième réseau de neurones détermine de façon aléatoire des paramètres du premier réseau à adapter et des paramètres du premier réseau à geler, et fournit au premier réseau des informations identifiant ces paramètres ;
- le premier réseau adapte ses paramètres en appliquant les informations qu'il a reçues, exécute sa fonction de traitement lors d'une phase d'inférence, et envoie ensuite au deuxième réseau des informations relatives à la qualité de la fonction de traitement après cette adaptation. Des séquences pilotes (comprenant des signaux d'entrée pour le premier réseau et des signaux de sortie correspondant à ces signaux d'entrée) sont utilisées pour cet apprentissage du deuxième réseau ;
- le deuxième réseau évalue l'influence des paramètres adaptés et des paramètres gelés sur la fonction de traitement, ajuste éventuellement l'identification des paramètres à adapter et des paramètres à geler, et envoie des nouvelles informations identifiant ces paramètres au premier réseau. Des échanges similaires entre le premier et le deuxième réseau de neurones, suite à des nouvelles évolutions du canal, sont répétées jusqu'à ce que le deuxième réseau de neurones soit optimisé.

Dans un mode de réalisation particulier, au cours de l'étape d'apprentissage du deuxième réseau de neurones, ce deuxième réseau est entrainé par :
- des valeurs des caractéristiques du canal avant et après une évolution ; et
- des paramètres du premier réseau de neurones déjà entraîné et/ou des signaux de sortie de la fonction de traitement associés auxdites valeurs des caractéristiques du canal.

Cet apprentissage permet au deuxième réseau d'établir une correspondance entre les paramètres du premier réseau et la variation des valeurs des caractéristiques du canal. A la fin de cette phase d'apprentissage, le deuxième réseau est en mesure de prédire les paramètres (poids et/ou biais) significatifs pour l'adaptation et l'optimisation du premier réseau de neurones. Les paramètres non significatifs ne sont pas ou peu modifiés lors d'une future phase d'apprentissage du premier réseau et leur modification n'entrainerait pas de réduction importante d'une fonction de perte utilisée pour la rétro-propagation du gradient au niveau du premier réseau. Ces paramètres non significatifs sont indiqués par le deuxième réseau comme devant être gelés. En particulier, un poids ou un biais peut être gelé lors d'une rétro-propagation de gradient.

En particulier, les signaux de sortie utilisés pour l'apprentissage du deuxième réseau de neurones peuvent avoir été utilisés pour l'apprentissage du premier réseau.

Dans un mode de réalisation particulier du procédé de détermination, les informations identifiant les paramètres à geler et les paramètres à adapter comportent au moins un taux d'apprentissage d'un paramètre du premier réseau de neurones et/ou au moins une valeur de pondération associée à un taux d'apprentissage.

Dans le premier cas, le deuxième réseau fournit directement au moins un taux d'apprentissage au premier réseau. Nous rappelons que selon l'état de la technique, un taux d'apprentissage est un paramètre multiplicatif qui peut pondérer la valeur d'un gradient lors d'une rétro-propagation du gradient. Dans le deuxième cas, le deuxième réseau fournit au premier réseau au moins une valeur de pondération d'un taux d'apprentissage, qui lui-même (le taux d'apprentissage) peut pondérer la valeur du gradient. Dans le deuxième cas, le premier réseau déduit et peut appliquer pour un paramètre donné, un taux d'apprentissage obtenu à partir d'un certain taux d'apprentissage de référence et de la valeur de pondération fournie par le deuxième réseau. Le taux d'apprentissage de référence peut être obtenu lors d'une configuration du premier réseau de neurones. En particulier, ce taux d'apprentissage de référence peut être spécifique pour un paramètre donné du premier réseau. Alternativement, il est identique pour tous les paramètres du premier réseau.

Ce mode de réalisation permet de préciser au premier réseau le taux selon lequel un paramètre doit être adapté, ce taux pouvant être inférieur à 100%. La qualité de la fonction de traitement est jugée acceptable lorsque les paramètres du premier réseau sont adaptés selon les taux d'apprentissage fournis par le deuxième réseau ou déduits des valeurs de pondération. De plus, ce mode permet d'économiser davantage les ressources nécessaires à l'adaptation des paramètres du premier réseau, en termes de capacité de calcul, car les paramètres à adapter ne sont pas tous forcément adaptés avec un taux d'apprentissage de 100%. En plus, le fait de se baser sur un taux d'apprentissage optimisé peut réduire le nombre d'étapes de rétro-propagation et accélérer l'adaptation des paramètres concernés.

Ce mode permet donc une adaptation encore plus rapide des paramètres du premier réseau, sans affecter l'expressivité du premier réseau.

Dans un mode de réalisation particulier, le procédé d'adaptation comprend avant ladite adaptation, une modification des informations fournies par le deuxième réseau de neurones et utilisées pour l'adaptation des paramètres du premier réseau.

A titre d'exemple, si les informations fournies par le deuxième réseau comportent des taux d'apprentissage de certains paramètres à adapter, le premier réseau peut être configuré pour modifier ces taux avant l'adaptation, par exemple en considérant des taux inférieurs aux taux fournis par le deuxième réseau afin de réduire encore le temps et/ou la capacité de calcul nécessaires pour l'adaptation.

Dans un mode de réalisation particulier du procédé de détermination, les informations identifiant les paramètres à geler et les paramètres à adapter comportent des nombres scalaires réels, par exemple compris entre 0 et 1, et qui représentent des taux d'apprentissage ou des valeurs de pondération de taux d'apprentissage.

Dans un mode de réalisation particulier, le procédé de détermination comprend en outre une fourniture au premier réseau de neurones de valeurs initiales pour initialiser des paramètres du premier réseau devant être adaptés.

Nous notons que les valeurs initiales des paramètres du premier réseau ont un impact sur la qualité de la fonction de traitement. Des valeurs initiales optimisées permettent de réduire le nombre d'étapes d'une rétro-propagation.

Le deuxième réseau de neurones peut déterminer les valeurs initiales de la même façon qu'il détermine les paramètres à geler ou à adapter. En particulier, le deuxième réseau de neurones peut être entraîné en outre par les valeurs initiales des paramètres du premier réseau déjà optimisé pour certaines valeurs de caractéristiques du canal de communication.

L'invention vise également un système d'adaptation des paramètres d'un premier réseau de neurones, ce système comportant au moins un premier dispositif conforme à l'invention et un deuxième dispositif conforme à l'invention.

Dans un mode de réalisation, le deuxième dispositif qui détermine les paramètres à geler ou à adapter dispose de plus de ressources en matière de mémoire et de capacité de calcul que le premier dispositif qui effectue l'adaptation des paramètres du premier réseau de neurones.

Dans un autre mode de réalisation, l'adaptation des paramètres du premier réseau de neurones, et/ou l'adaptation des paramètres du deuxième réseau de neurones peuvent être effectuées par le même dispositif.

Telle que proposée, l'exécution d'un dit réseau de neurones (dans une phase d'inférence du réseau de neurones) peut être effectuée par un autre dispositif que celui qui effectue l'apprentissage et/ou l'adaptation des paramètres de ce réseau de neurones. Le dispositif qui effectue l'apprentissage ou l'adaptation envoie les paramètres du réseau de neurones au dispositif qui l'exécute.

Dans un mode de réalisation de l'invention, le premier dispositif est une station de base, par exemple de type eNodeB, eNodeB évoluée ou gNodeB et le deuxième dispositif est un serveur du cœur du réseau de communication, par exemple un serveur de type "datacenter". Le deuxième dispositif peut effectuer des calculs centralisés pour plusieurs premiers dispositifs de type stations de base. Le réseau de communication peut être un réseau cellulaire, par exemple de type 3G, 4G, 5G (de la troisième, quatrième, cinquième génération) ou une génération ultérieure.

Dans un mode de réalisation de l'invention, le premier dispositif est un terminal tel qu'un téléphone mobile, un ordinateur, une voiture connectée, une montre connectée, une tablette ou tout autre équipement d'utilisateur. Le deuxième dispositif est un serveur du cœur du réseau de communication, par exemple un serveur de type datacenter. Les premier et deuxième dispositifs communiquent entre eux via une station de base, par exemple de type eNodeB, eNodeB évoluée ou gNodeB.

L'invention a une application avantageuse lorsque la fonction de traitement est appliquée à des signaux échangés dans une couche physique d'un réseau de communication de sixième génération 6G.

L'adaptation des paramètres du premier réseau selon la technique proposée peut être pratiquement en temps réel, au fur et à mesure de la détection de l'évolution du canal.

L'invention a une application avantageuse dans le cadre de la standardisation des modes d'échanges entre les équipements d'un réseau de communication pour la mise en œuvre des réseaux de neurones.

L'invention vise également un programme d'ordinateur sur un support d'enregistrement, ce programme étant susceptible d'être mis en œuvre dans un ordinateur ou dans le premier dispositif proposé. Ce programme comporte des instructions adaptées à la mise en œuvre d'un procédé d'adaptation tel que décrit ci-dessus, lorsque le programme est exécuté par un ordinateur.

L'invention vise également un programme d'ordinateur sur un support d'enregistrement, ce programme étant susceptible d'être mis en œuvre dans un ordinateur ou dans le deuxième dispositif proposé. Ce programme comporte des instructions adaptées à la mise en œuvre d'un procédé de détermination tel que décrit ci-dessus, lorsque le programme est exécuté par un ordinateur.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information ou un support d'enregistrement lisibles par un ordinateur, et comportant des instructions d'un programme d'ordinateur tel que mentionné ci-dessus.

Le support d'information ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur, ou une mémoire flash.

D'autre part, le support d'information ou d'enregistrement peut être un support transmissible tel qu'un signal électrique ou optique, qui peut être acheminé via un câble électrique ou optique, par lien radio, par lien optique sans fil ou par d'autres moyens.

Les programmes selon l'invention peuvent être en particulier téléchargés sur un réseau de type Internet.

Alternativement, le support d'informations ou d'enregistrement peut être un circuit intégré dans lequel l'un des programmes est incorporé, le circuit étant adapté pour exécuter ou pour être utilisé dans l'exécution d'un procédé conforme à l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1, déjà décrite, illustre une architecture d'un réseau de communication dans lequel un réseau de neurones est utilisé selon une méthode de l'état de la technique ;
- la figure 2 est une architecture d'un réseau de communication dans lequel des procédés proposés sont mis en œuvre selon un mode de réalisation particulier ;
- la figure 3 est un organigramme représentant des étapes d'un procédé d'adaptation et des étapes d'un procédé de détermination mis en œuvre selon un premier mode de réalisation particulier ;
- la figure 4 est un organigramme représentant des étapes d'un procédé d'adaptation et des étapes d'un procédé de détermination mis en œuvre selon un deuxième mode de réalisation particulier ;
- la figure 5 représente une architecture fonctionnelle, selon un mode de réalisation particulier, d'un système d'adaptation des paramètres d'un réseau de neurones ; et
- la figure 6 représente une architecture matérielle d'un dispositif d'adaptation des paramètres ou d'un dispositif de détermination des paramètres à geler ou à adapter selon un mode de réalisation particulier.

### Description des modes de réalisation

La **figure 2** est une architecture d'un réseau de communication NET dans lequel un procédé d'adaptation des paramètres d'un réseau de neurones et un procédé de détermination des paramètres à geler ou à adapter sont mis en œuvre selon un mode de réalisation particulier.

Dans le mode décrit ici, le réseau NET est un réseau de communication cellulaire, par exemple de type 3G, 4G, 5G ou de génération ultérieure. Cependant, le procédé proposé peut être mis en œuvre dans des réseaux de communication reposant sur d'autres technologies. Par exemple, le réseau de communication NET peut être un réseau optique.

Le réseau de communication NET comporte au moins un terminal UE d'un utilisateur tel qu'un téléphone mobile, une tablette ou un ordinateur et au moins une station de base BS de type eNodeB ou gNodeB. Un canal de communication radio CN relie le terminal UE à la station de base BS. Le réseau NET comporte également un serveur DC de type centre de données (datacenter). La station de base BS et le serveur DC forment un système d'adaptation SYS conforme à l'invention.

Un signal radio x(t) émis par le terminal UE vers la station de base BS subit des altérations du canal CN, par exemple des effets de non-linéarité complexes des amplificateurs de puissance ou des effets liés à sa propagation sur le canal, tel qu'un affaiblissement de son amplitude (sa puissance), un masquage, une rotation d'une phase des symboles compris dans le signal, un décalage de fréquence, une désynchronisation d'échantillonnage, une interférence avec d'autres signaux transmis sur des canaux voisins, etc. La station de base reçoit un signal y(t) différent du signal émis x(t).

La station de base BS comprend un premier dispositif D1 conforme à l'invention. Ce premier dispositif D1 a l'architecture d'un ordinateur. Il est configuré pour mettre en œuvre un réseau de neurones EQL. Le premier dispositif D1 est configuré pour effectuer la phase d'apprentissage du réseau EQL, pour adapter des paramètres P1(t) de ce réseau EQL et également pour l'exécuter (phase d'inférence) une fois la phase d'apprentissage (ou d'adaptation) terminée. Ce réseau de neurones EQL permet d'exécuter une fonction de traitement de signal, telle une fonction d'égalisation pour pallier les effets du canal CN. Le réseau de neurones EQL peut être un réseau profond de type DNN, ayant une complexité élevée mais aussi une expressivité qualitative.

Le réseau de neurones EQL est destiné à estimer le signal x(t) émis par le terminal UE à partir du signal y(t) reçu par la station de base BS (également appelé signal en entrée). Le réseau EQL réalise des opérations de traitement de signal pour mettre en œuvre la fonction d'égalisation. Le réseau EQL utilise une certaine fonction d'erreur. Le résultat de l'estimation du signal x(t) par application du réseau EQL est noté x1(t).

Le premier réseau de neurones EQL est configuré pour mettre en œuvre une fonction d'égalisation. De manière générale, ce réseau EQL est configuré pour mettre en œuvre une fonction de traitement de signal pour traiter un signal en entrée (y(t)) afin d'obtenir un signal en sortie (x(t)). Par exemple, la fonction de traitement de signal peut comporter une synchronisation temporelle et/ou fréquentielle entre l'émetteur et le récepteur. Pour conserver cette synchronisation, il est nécessaire d'effectuer un certain nombre de mesures de dérive temporelle/fréquentielle.

Le serveur DC a l'architecture d'un ordinateur et forme un deuxième dispositif conforme à l'invention. Il est configuré pour mettre en œuvre un deuxième réseau de neurones FRZ. Le serveur DC est configuré pour effectuer l'apprentissage, l'adaptation (réapprentissage) et l'exécution de ce réseau de neurones FRZ.

Les paramètres des réseaux EQL et FRZ sont notés respectivement P1(t) et P2(t), ces paramètres comprenant les fonctions, les poids et les biais des neurones de chacun de ces réseaux.

Le deuxième réseau de neurones FRZ est entraîné en association avec le premier réseau de neurones EQL. Le deuxième réseau FRZ est configuré pour déterminer des paramètres P1(t) du premier réseau EQL à geler et des paramètres P1(t) du premier réseau EQL à adapter suite à une évolution du canal de communication CN.

Le premier réseau EQL est configuré pour envoyer au deuxième réseau FRZ des informations M12 sur une évolution du canal CN, nécessitant une adaptation des paramètres P1(t). Le deuxième réseau FRZ fournit au premier réseau EQL des informations M21 sur les paramètres P1(t) à geler et les paramètres P1(t) à adapter.

Le premier dispositif D1 et le serveur DC sont décrits comme des dispositifs. Leur fonction réseau peut également être mise en œuvre par des fonctions virtuelles (VNF pour « Virtual Network Function ») s'exécutant sur des équipements.

Dans un mode de réalisation, le premier dispositif D1 ne fait pas partie de la station de base BS. Il peut être distant de celle-ci mais reçoit d'elle le signal en entrée y(t).

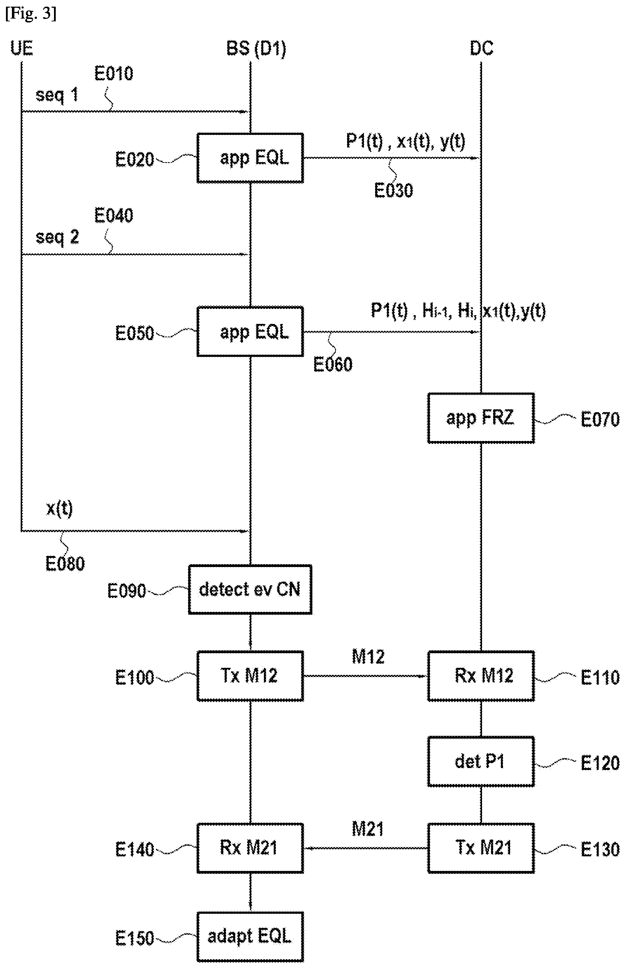

La **figure 3** est un organigramme représentant des étapes d'un procédé d'adaptation et des étapes d'un procédé de détermination, mis en œuvre selon un premier mode de réalisation particulier, respectivement par le premier dispositif D1 et le serveur DC décrits en référence à la figure 2.

Au cours d'une étape E010, le terminal UE, en tant qu'émetteur, transmet une séquence pilote d'apprentissage seq1 comportant des symboles permettant à la station de base BS en tant que récepteur, et en particulier à son premier dispositif D1, d'estimer le canal de communication CN. Cette séquence d'apprentissage seq1 peut être entièrement ou partiellement connue par le premier dispositif D1, de même que ses propriétés statistiques. La séquence émise seq1 comporte l'ensemble des signaux cibles x(t) pour le dispositif récepteur D1. A titre illustratif, une séquence de symboles déterministes est de type Zadoff-Chu. Un exemple d'une telle séquence est défini dans la spécification 3GPP TS 38.211 « NR; Physical channels and modulation (Release 15) » v15.8.0.

Au cours d'une étape E020, le premier dispositif D1 de la station de base BS apprend les paramètres P1(t) du premier réseau de neurones EQL. Le terminal UE envoie des signaux cibles x(t), correspondants à la séquence d'apprentissage seq1, et la station de base BS reçoit des signaux y(t), dits signaux en entrée, qui correspondent aux signaux x(t) suite à leur altération par le canal CN. Le premier dispositif D1 entraîne son réseau EQL en utilisant les signaux d'entrée y(t) et la séquence d'apprentissage seq1. Par exemple, cet apprentissage (E020) met à jour de manière itérative les paramètres P1(t) du premier réseau EQL par rétro-propagation du gradient en minimisant une fonction de coût (également appelée fonction d'erreur) basée sur la qualité de la reconstruction de la séquence connue seq1, effectuée par le réseau EQL.

A la fin de la phase d'apprentissage E020, et au cours d'une étape E030, la station de base BS envoie au serveur DC les paramètres P1(t) pour un apprentissage supervisé du deuxième réseau de neurones FRZ.

L'apprentissage E020 du premier réseau peut être réalisé en ligne (en mode « online » en anglais), c'est-à-dire basé sur des signaux y(t) réels, ou hors ligne (en mode « offline » en anglais), c'est-à-dire basé sur des signaux y(t) simulés par ordinateur.

Nous supposons que le canal CN évolue et que la qualité de la fonction de traitement mise en œuvre par le premier réseau de neurones EQL se dégrade suite à cette évolution.

Au cours d'une étape E040 et après l'évolution du canal CN, le terminal UE envoie à la station de base une séquence pilote d'apprentissage seq2, qui peut en particulier être similaire à la séquence pilote seq1.

Le premier dispositif adapte alors le réseau EQL au cours d'une étape E050. Par exemple, cette adaptation E050 peut consister en la mise à jour de manière itérative des paramètres P1(t) du réseau EQL par rétro-propagation du gradient en minimisant la fonction de coût basée sur la qualité de la reconstruction, par le modèle, de la séquence connue seq2.

A la fin de la phase d'adaptation E050, et au cours d'une étape E060, la station de base BS envoie au serveur DC :
- les nouveaux paramètres P1(t) déterminés suite à l'évolution du canal CN ; et
- des valeurs de caractéristiques de propagation de signaux sur le canal CN, avant et après l'évolution, par exemple l'amplitude ou la phase d'une signal. Ces valeurs des caractéristiques, avant et juste après l'évolution, sont notées H(i-1) et Hi respectivement.

Au cours d'une étape E070, le serveur DC apprend les paramètres P2(t) du réseau de neurones FRZ. L'apprentissage des paramètres P2(t) se base sur une observation des paramètres P1(t) qui ont été modifiés suite à l'évolution du canal CN et les amplitudes avec lesquelles ces paramètres P1(t) ont été modifiés. Suivant les amplitudes des modifications observées, le deuxième réseau FRZ peut établir une valeur seuil en dessous de laquelle il considère qu'un paramètre P1(t) n'a pas été modifié significativement. La valeur seuil peut être globale pour tous les paramètres P1(t) ou spécifique pour chaque paramètre P1(t) du réseau EQL.

Nous supposons qu'au cours d'une étape E080, le terminal UE envoie un nouveau signal x(t) sur le canal CN à destination de la station de base BS. Nous supposons qu'au moins certaines des caractéristiques de propagation sur le canal CN ont changé depuis la dernière adaptation (E050) du premier réseau EQL.

Au cours d'une étape E090 du procédé d'adaptation selon l'invention, le premier dispositif D1 de la station de base BS détecte une nouvelle évolution du canal CN qui résulte en une dégradation de la fonction de traitement.

Selon une première variante du mode de réalisation décrit ici, le canal de communication CN est modélisé sous la forme d'un ensemble de trajets représentés par des coefficients complexes. Ce vecteur de coefficients est convolué au signal transmis x(t) pour donner le signal y(t). L'évolution du canal CN est mesurée par une différence de phase et/ou d'amplitude des coefficients complexes du canal. Si la différence est supérieure à un seuil donné, le premier dispositif D1 détecte (E090) l'évolution du canal CN et décide qu'une optimisation (réapprentissage) du réseau EQL est nécessaire.

Selon une deuxième variante, le premier dispositif D1 détecte (E090) l'évolution du canal CN en observant une dégradation des performances de la fonction de traitement basée sur le canal estimé. La dégradation est observée suite à une comparaison, pour un signal d'entrée y(t) donné, entre un signal en sortie x1(t) obtenu par la fonction de traitement et un signal de référence x(t) attendu.

Suite à la détection E090 de l'évolution du canal CN, le premier dispositif D1 envoie au serveur DC, au cours d'une étape E100 du procédé d'adaptation, des informations M12 sur ladite évolution pour un traitement par le deuxième réseau de neurones FRZ.

Les informations M12 peuvent comprendre les valeurs Hi des caractéristiques du canal CN pour lesquelles le réseau EQL est déjà optimisé, ainsi que des valeurs H(i+1) estimées pour ces mêmes caractéristiques après l'évolution du canal. Alternativement, les informations M12 peuvent comprendre une différence complexe entre les valeurs Hi de caractéristiques de propagation sur le canal CN avant l'évolution et les valeurs H(i+1) estimées de ces caractéristiques après l'évolution.

Optionnellement, les informations M12 peuvent comporter en outre au moins une valeur actuelle d'un paramètre du premier réseau EQL, par exemple la valeur d'un poids ou d'un biais, et/ou une valeur de la fonction de perte et/ou au moins une composante du gradient de la fonction de perte. Cela permet d'informer le deuxième réseau FRZ des valeurs actuelles s'il ne les connaît pas. En particulier, la valeur de la fonction de perte peut représenter pour le deuxième réseau une indication sur le nombre de paramètres du premier réseau devant être adaptés.

Au cours d'une étape E110 du procédé de détermination selon l'invention, le serveur DC reçoit les informations M12 du premier dispositif D1.

Au cours d'une étape E120, le serveur DC détermine, par le deuxième réseau de neurones FRZ, et à partir des informations reçues M12, les paramètres P1(t) du premier réseau EQL à geler et les paramètres P1(t) à adapter suite à l'évolution du canal CN. Plus précisément, le deuxième réseau FRZ détermine pour un paramètre P1 donné, une probabilité pour que ce paramètre doive être gelé ou adapté.

Au cours d'une étape E130, le serveur DC et en particulier le deuxième réseau FRZ, fournit au premier réseau de neurones EQL des informations M21 identifiant les paramètres P1(t) à geler et les paramètres P1(t) à adapter.

Selon une variante, les informations M21 comportent une liste de zéro (0) et de un (1), associés respectivement à des paramètres P1 devant être gelés (0) ou devant être adaptés (1). Par exemple, le deuxième réseau FRZ associe le chiffre 0 aux paramètres (à geler) pour lesquels une probabilité strictement inférieure à 0.5 a été déterminée au cours de l'étape E120, et le chiffre 1 aux paramètres (à adapter) pour lesquels une probabilité supérieure ou égale à 0.5 a été déterminée. Les informations M21 forment une liste binaire de type bitmap.

Selon une autre variante, les informations M21 comportent des nombres scalaires réels. A titre d'exemple, ces nombres peuvent être compris entre 0 et 1 et viennent pondérer des taux d'apprentissage associés à chacun des paramètres P1(t). Le taux d'apprentissage peut être défini individuellement pour chacun des paramètres P1(t) ou être identique pour tous les paramètres P1(t) ou au moins une partie d'entre eux. Nous rappelons que selon l'état de la technique, un taux d'apprentissage est un paramètre multiplicatif qui peut pondérer la valeur du gradient lors de la rétro-propagation du gradient.

Les valeurs scalaires peuvent être les probabilités déterminées au cours de l'étape E120. Alternativement, le deuxième réseau FRZ peut être configuré pour comparer les probabilités déterminées au cours de l'étape E120 avec un seuil et modifier ces probabilités dans les informations M21 fournies au premier réseau EQL. Par exemple, des probabilités inférieures à un certain seuil (par exemple 0.2) peuvent être arrondies à 0 (poids gelé), permettant ainsi de moduler la réduction de la complexité de l'apprentissage du réseau EQL.

Selon une autre variante, les informations M21 comportent des valeurs scalaires qui sont des taux d'apprentissage associés à des paramètres P1(t).

Le deuxième réseau FRZ peut être configuré pour fournir en outre des valeurs initiales utilisées pour initier des paramètres P1(t) du premier réseau EQL devant être adaptés. Les informations M21 comportent ces valeurs initiales.

Au cours d'une étape E140 du procédé d'adaptation, le premier dispositif D1 reçoit les informations M21 fournies par le deuxième réseau de neurones FRZ, identifiant les paramètres du premier réseau EQL à geler ou à adapter suite à l'évolution détectée (E090), et reçoit éventuellement des taux d'apprentissage ou des valeurs de pondération associées à des taux d'apprentissage pour les paramètres à adapter.

Au cours d'une étape E150 du procédé d'adaptation, le premier dispositif D1 adapte les paramètres identifiés P1(t) du premier réseau de neurones EQL en utilisant les informations M21 fournies par le deuxième réseau de neurones FRZ. En particulier, le premier réseau tient compte des valeurs initiales des paramètres P1 si ces valeurs sont présentes dans les informations M21.

Dans le mode décrit ici en référence à la figure 3, le premier réseau EQL obéit strictement au deuxième réseau FRZ, il adapte ses paramètres P1(t) conformément aux informations M21. Dans un autre mode de réalisation, le premier réseau de neurones EQL modifie les informations reçues M21 avant d'adapter les paramètres P1, par exemple en réduisant au moins certains taux d'apprentissage.

En exécutant le premier réseau EQL après son adaptation E150, le premier dispositif peut égaliser le canal évolué CN et estimer des signaux x(t) qui ont été émis par le terminal UE. Selon un exemple, si l'altération du signal x(t) par le canal CN résulte en un affaiblissement de sa puissance par moitié, le réseau de neurones EQL met en œuvre une fonction d'égalisation du signal reçu y(t) en multipliant sa puissance par deux pour estimer le signal x(t). Le réseau de neurones EQL peut compenser d'autres effets plus complexes et mettre en œuvre la fonction d'égalisation avec une meilleure fiabilité.

Dans un mode de réalisation, les paramètres P2(t) du deuxième réseau FRZ sont adaptés après un nombre donné d'adaptations E150 des paramètres P1(t) du premier réseau EQL.

Dans un mode de réalisation particulier, au cours des étapes E030 et E060, le premier réseau EQL envoie également à destination du deuxième réseau FRZ (tel que présenté sur la figure 3) les signaux d'entrée y(t) et les signaux de sortie x1(t) estimés par le premier réseau EQL déjà entraîné (E020) et adapté (E050). En particulier, le premier réseau EQL peut envoyer au cours des étapes E030 et E060 les séquences pilotes seq1 et seq2. L'apprentissage (E070) du deuxième réseau de neurones FRZ peut tenir compte de ces informations complémentaires. Ces informations permettent au deuxième réseau FRZ d'entrevoir les opérations effectuées par le premier réseau EQL pour estimer un signal x1(t) à partir d'un signal y(t). Selon ce mode de réalisation, le premier réseau envoie également les signaux d'entrée y(t) et les signaux de sortie x1(t) au cours de l'étape E100, pour que le deuxième réseau FRZ les utilise au cours de l'étape E110 dans la phase d'inférence.

Dans un mode de réalisation particulier, la station de base BS envoie au cours des étapes E030 et E060 uniquement les signaux y(t) associés à la séquence d'apprentissage seq1 et/ou seq2 qu'elle a reçus au serveur DC. Dans ce mode de réalisation particulier, le serveur DC dispose d'une information relative à la séquence d'apprentissage seq1 et/ou seq2, par exemple un numéro de séquence d'apprentissage, ou bien mémorise la séquence d'apprentissage.

Dans le mode décrit en référence à la figure 3, L'apprentissage E020, E050 du réseau EQL et l'apprentissage E070 du réseau FRZ sont de type « apprentissage supervisé », mis en œuvre en considérant pour le premier réseau EQL des séquences de symboles seq1, seq2 connus affectés par le canal CN, et pour le deuxième réseau FRZ les informations Hi, Hi+1 sur l'évolution du canal et les paramètres P1(t) avant et après l'évolution. Dans un autre mode de réalisation, l'apprentissage du réseau EQL et l'apprentissage du réseau FRZ est de type « apprentissage non supervisé » ou « par renforcement ».

Un apprentissage par renforcement du premier ou du deuxième réseau se base sur une fonction extérieure qui fournit une estimation de la qualité de la sortie fournie par le réseau de neurones en question. La sortie fournie par le réseau EQL est le signal de sortie x1(t). La sortie fournie par le réseau FRZ est une liste (par exemple de type bitmap) identifiant les paramètres P1(t) à adapter et les paramètres P1(t) à geler.

Dans un mode de réalisation particulier où l'apprentissage du deuxième réseau de neurones FRZ est par renforcement :
- le premier réseau de neurones EQL envoie au cours des étapes E030 et E060 au deuxième réseau des caractéristiques Hi, Hi+1 du canal avant et après son évolution du canal sans lui envoyer les paramètres P1(t), le premier réseau EQL étant déjà entraîné pour les caractéristiques Hi du canal avant l'évolution ;
- le deuxième réseau de neurones FRZ détermine de façon aléatoire des paramètres P1(t) du premier réseau à adapter et des paramètres P1(t) du premier réseau à geler, et fournit au premier réseau EQL des informations M21 identifiant ces paramètres ;
- le premier réseau adapte ses paramètres en appliquant les informations M21 qu'il a reçues, exécute sa fonction de traitement lors d'une phase d'inférence, et envoie ensuite au deuxième réseau FRZ des informations relatives à la qualité de la fonction de traitement après cette adaptation. Des séquences pilotes sont utilisées pour cet apprentissage du deuxième réseau ;
- le deuxième réseau évalue l'influence des paramètres adaptés et des paramètres gelés sur la fonction de traitement, ajuste éventuellement l'identification des paramètres à adapter et des paramètres à geler, et envoie des nouvelles informations M21 identifiant ces paramètres au premier réseau. Des échanges similaires entre le premier et le deuxième réseau de neurones sont répétées jusqu'à ce que le deuxième réseau de neurones soit optimisé.

On peut considérer, pour l'apprentissage du deuxième réseau FRZ, une fonction qui détermine une qualité de la fonction de traitement (l'égalisation du canal) réalisée par le réseau EQL à la suite d'un entrainement prenant en compte les informations M21 fournies par le réseau FRZ. Cette qualité peut être évaluée de différentes façons, par exemple :
- une comparaison entre des signaux x(t) émis par le terminal UE et des signaux x1(t) estimés par le réseau EQL ;
- une comparaison des signaux estimés x1(t) avec des signaux obtenus par un traitement théorique des signaux émis x(t) ; ou
- une comparaison des signaux estimés x1(t) par le réseau EQL entrainé selon un apprentissage par renforcement avec des signaux estimés x1(t) par le réseau EQL entrainé selon un apprentissage supervisé.

Dans le cas d'un apprentissage supervisé, le deuxième réseau peut déterminer les valeurs d'initialisation des paramètres P1(t) à adapter, étant donné que ce deuxième réseau est entrainé (E070) avec des valeurs initiales de ces paramètres, qui ont été optimisées (E020, E050) par le premier réseau EQL. Dans le cas d'un apprentissage par renforcement, le deuxième réseau peut déterminer les valeurs d'initialisation des paramètres P1(t) à adapter en se basant sur une fonction extérieure, comme c'est le cas pour la détermination des paramètres à adapter et des paramètres à geler.

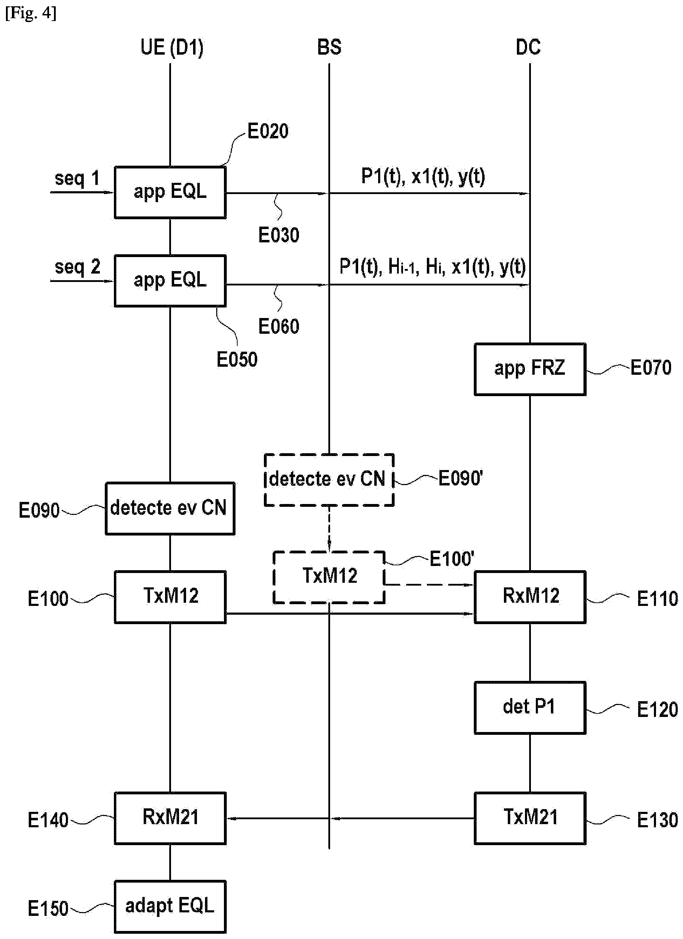

La **figure 4** est un organigramme représentant des étapes d'un procédé d'adaptation et des étapes d'un procédé de détermination, mis en œuvre selon un deuxième mode de réalisation particulier, respectivement par le terminal UE et le serveur DC décrits en référence à la figure 2.

Dans ce mode de réalisation, le terminal UE constitue un premier dispositif conforme à l'invention. Le terminal UE est configuré pour entraîner, adapter et exécuter le premier réseau de neurones EQL. Le terminal UE utilise le réseau EQL pour traiter des signaux x(t) émis par la station de base BS. Les signaux x(t) sont altérés par le canal CN. Cette altération produit des signaux y(t) reçus par le terminal UE.

Au cours d'étapes E020 et E050 du procédé d'adaptation, similaires aux étapes E020 et E050 décrites en référence à la figure 3, le terminal UE entraîne le premier réseau de neurones EQL.

Au cours d'étapes E030 et E060 du procédé d'adaptation similaires aux étapes E030 et E060 décrites en référence à la figure 3, le terminal UE envoie les signaux estimés x1(t), les signaux reçus y(t), et les paramètres P1(t) du premier réseau de neurones EQL, avant et après la première évolution du canal CN, au serveur DC pour un traitement par le deuxième réseau de neurones FRZ. Au cours de l'étape E060, le terminal UE envoie également les valeurs H(i-1) et Hi des caractéristiques du canal CN avant et après la première évolution du canal.

Au cours d'une étape E070 du procédé de détermination selon l'invention, similaire à l'étape E070 décrite en référence à la figure 3, le serveur DC entraîne le deuxième réseau FRZ en association avec le premier réseau EQL sur la base des informations envoyées (E030, E060) par le terminal UE.

Au cours d'une étape E090 du procédé d'adaptation selon l'invention, similaire à l'étape E090 décrite en référence à la figure 3, le terminal UE détecte une deuxième évolution du canal CN.

Au cours d'une étape E100 similaire à l'étape E100 décrite en référence à la figure 3, le terminal UE envoie les informations M12 sur l'évolution détectée au serveur DC, par l'intermédiaire de la station de base BS. Comme l'utilisation de l'interface radio implique des ressources qui sont par nature limitées, il est préférable qu'une faible quantité d'informations M12 soit émise. Dans cet exemple, le terminal UE transmet simplement la différence entre les nouvelles valeurs estimées H(i+1) des caractéristiques du canal CN et les valeurs précédentes Hi de ces caractéristiques pour lesquelles le réseau EQL est actuellement optimisé.

Dans une variante de ce deuxième mode de réalisation, le canal de communication CN entre le terminal UE et la station de base BS est réciproque, par exemple un canal duplex par séparation temporelle, TDD (pour « Time Division Duplexing » en anglais). La station de base BS peut détecter, au cours d'une étape E090', l'évolution du canal CN et déterminer si le réseau EQL du terminal UE nécessite un nouvel entrainement. Si tel est le cas, la station de base envoie au cours d'une étape E100' des informations M12 concernant l'évolution du canal, à destination du deuxième réseau FRZ du serveur DC.

Au cours d'étapes E110, E120 et E130 du procédé de détermination selon l'invention, similaires aux étapes E110, E120 et E130 décrites en référence à la figure 3, le serveur DC reçoit les informations M12, détermine les paramètres P1(t) à geler et les paramètres P1(t) à adapter et envoie les informations M21 au terminal UE, via la station de base BS.

Au cours d'étapes E140 et E150 du procédé d'adaptation selon l'invention, similaires aux étapes E140 et E150 décrites en référence à la figure 3, le terminal UE reçoit les informations M21 et adapte ses paramètres P1(t) en fonction des informations M21.

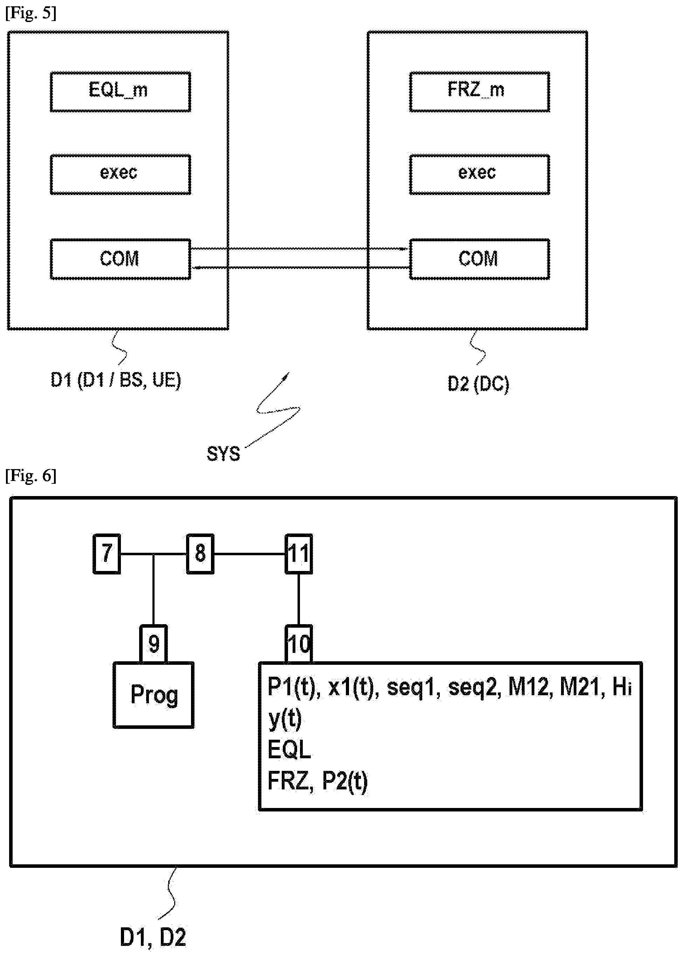

La **figure 5** représente une architecture fonctionnelle, selon un mode de réalisation de l'invention, d'un système d'adaptation SYS proposé.

Le système SYS comporte :
- au moins un premier dispositif D1 conforme à l'invention, tel que le dispositif D1 décrit en référence aux figures 2 et 3 et compris dans la station de base BS, ou le terminal UE décrit en référence à la figure 4 ; et
- un deuxième dispositif D2 conforme à l'invention, tel que le serveur DC décrit en référence aux figures 2, 3 et 4.

Ces dispositifs D1 et D2 comportent respectivement des modules EQL_m et FRZ_m qui sont configurés pour entraîner (E020, E050, E070) les réseaux de neurones EQL et FRZ, et adapter (E150) leurs paramètres.

Chacun des dispositifs D1 et D2 du système SYS comporte un module exec configuré pour exécuter le réseau de neurones correspondant, EQL ou FRZ.

Chacun des dispositifs D1 et D2 du système SYS comporte un module de communication COM configuré pour échanger (E030, E060, E100, E110, E130 et E140) les informations relatives à l'évolution du canal CN, c'est-à-dire les informations M12, et les informations relatives aux paramètres P1(t) à adapter et aux paramètres P1(t) à geler, c'est-à-dire les informations M21, comme exposé précédemment en référence aux figures 3 et 4.

Dans un mode de réalisation, le premier dispositif D1 et le deuxième dispositif D2 forment un seul dispositif, qui peut par exemple être inclus dans la station de base BS.

Dans le mode de réalisation décrit ici, chaque dispositif D1 et D2 du système d'adaptation SYS a l'architecture matérielle d'un ordinateur, telle qu'illustrée à la **figure 6****.**

L'architecture de chacun des dispositifs D1 et D2 comprend notamment un processeur 7, une mémoire vive 8, une mémoire morte 9, une mémoire flash non volatile 10 dans un mode particulier de réalisation, ainsi que des moyens de communication 11. De tels moyens sont connus en soi et ne sont pas décrits plus en détail ici.

La mémoire morte 9 du dispositif D1 ou D2 constitue un support d'enregistrement conforme à l'invention, lisible par le processeur 7 et sur lequel est enregistré ici un programme d'ordinateur Prog conforme à l'invention.

La mémoire 10 du dispositif D1 ou D2 permet d'enregistrer des variables utilisées pour l'exécution des étapes du procédé d'adaptation des paramètres d'un réseau de neurones, tel que décrit précédemment, ou des étapes du procédé de détermination des paramètres à geler ou à adapter, tel que décrit précédemment. Ces variables comprennent par exemple les paramètres P1(t), les signaux estimés x1(t), les signaux reçus y(t), les séquences seq1 et seq2, les valeurs Hi et les informations M12 et M21. La mémoire 10 du premier dispositif D1 enregistre en outre le premier réseau EQL. La mémoire 10 du deuxième dispositif D2 enregistre en outre le deuxième réseau FRZ et les paramètres P2(t) de ce deuxième réseau FRZ.

Le programme d'ordinateur Prog définit des modules fonctionnels et logiciels, configurés ici pour adapter les paramètres d'un réseau de neurones (EQL) ou déterminer les paramètres à geler ou à adapter. Ces modules fonctionnels s'appuient sur et/ou commandent les éléments matériels 7-11 précités du dispositif D1 ou D2.

## Revendications

1. Procédé mis en œuvre par ordinateur d'adaptation des paramètres d'un premier réseau de neurones (EQL) utilisé dans un réseau de communication (NET) pour mettre en œuvre un traitement par un équipement (BS) d'un signal en entrée (y(t)) reçu après transmission par un canal de communication d'un signal émis par un terminal (UE) et obtenir un signal en sortie (x(t)), les paramètres du premier réseau de neurones dépendant de caractéristiques de propagation du canal de communication, ledit premier réseau de neurones (EQL) a été entraîné (E020) pour des valeurs initiales de caractéristiques de propagation du canal de communication, ledit procédé comprend :
- suite à une détection (E090) d'une dégradation d'une qualité du traitement due à une évolution dudit canal, envoi (E100) par le premier réseau de neurones d'informations (M12) sur ladite évolution au deuxième réseau de neurones (FRZ), ledit deuxième réseau de neurones (FRZ) ayant été entraîné (E070) pour établir une correspondance entre une évolution du canal et l'adaptation des paramètres du premier réseau et étant utilisé pour déterminer des paramètres dudit premier réseau (EQL) à geler et des paramètres dudit premier réseau (EQL) à adapter suite à une évolution du canal ;
- réception (E140) d'informations (M21), fournies par ledit deuxième réseau de neurones (FRZ), identifiant des paramètres dudit premier réseau (EQL) à geler et des paramètres du premier réseau (EQL) à adapter suite à l'évolution détectée ; et
- adaptation (E150) des paramètres identifiés (P1(t)) dudit premier réseau de neurones (EQL) en utilisant les informations fournies par ledit deuxième réseau de neurones (FRZ).

2. Procédé selon la revendication 1 comprenant en outre un envoi (E100), en association avec les informations (M12) sur ladite évolution, d'au moins un paramètre dudit premier réseau de neurones (EQL) parmi un poids et un biais, et/ou d'une valeur d'une fonction de perte et/ou d'au moins une composante d'un gradient de la fonction de perte.

3. Procédé selon l'une quelconque des revendications 1 ou 2 selon lequel les informations (M12) sur ladite évolution comportent :
- des valeurs (H0) de caractéristiques de propagation du canal avant l'évolution, pour lesquelles ledit premier réseau de neurones (EQL) est optimisé ; et
- des valeurs estimées (H1) de ces caractéristiques suite à l'évolution.

4. Procédé selon l'une quelconque des revendications 1 à 3 selon lequel les informations (M12) sur ladite évolution comportent une différence complexe entre des valeurs de caractéristiques de propagation sur ledit canal avant l'évolution et des valeurs estimées de ces caractéristiques après l'évolution.

5. Procédé selon l'une quelconque des revendications 1 à 4 selon lequel la détection (E090) d'une dégradation d'une qualité du traitement due à une évolution du canal comporte :
- une comparaison entre un seuil et une valeur d'une variation d'une caractéristique de propagation du signal d'entrée reçu ; et/ou
- une comparaison, pour un signal d'entrée donné, entre un signal en sortie obtenu par le traitement et un signal de référence.

6. Procédé selon l'une quelconque des revendications 1 à 5 comprenant avant ladite adaptation (E150), une modification des informations fournies par ledit deuxième réseau de neurones (FRZ) et utilisées pour ladite adaptation.

7. Procédé mis en œuvre par ordinateur de détermination de paramètres d'un premier réseau de neurones (EQL) à geler ou à adapter, ledit premier réseau de neurones (EQL) étant utilisé dans un réseau de communication (NET) pour mettre en œuvre un traitement par un équipement (BS) d'un signal en entrée (y(t)) reçu après transmission par un canal de communication d'un signal émis par un terminal (UE) et obtenir un signal en sortie (x(t)), les paramètres du premier réseau de neurones dépendant de caractéristiques de propagation du canal de communication, ledit premier réseau de neurones (EQL) ayant été entraîné (E020) pour des valeurs initiales de caractéristiques de propagation du canal de communication, ledit procédé comprend :
- apprentissage (E070) d'un deuxième réseau de neurones (FRZ) pour établir une correspondance entre une évolution du canal et l'adaptation des paramètres du premier réseau ;
- réception (E110) par le deuxième réseau de neurones (FRZ) d'informations (M12) sur une évolution dudit canal résultant en une dégradation d'une qualité du traitement ;
- détermination (E120) par ledit deuxième réseau de neurones (FRZ), à partir des informations reçues (M12), des paramètres dudit premier réseau (EQL) à geler et des paramètres dudit premier réseau (EQL) à adapter suite à ladite évolution ; et
- envoi (E130) au premier réseau de neurones (EQL) d'informations (M21) identifiant les paramètres à geler et les paramètres à adapter.

8. Procédé selon la revendication 7 selon lequel lesdites informations (M21) identifiant les paramètres à geler et les paramètres à adapter comportent au moins un taux d'apprentissage d'un paramètre (P1) dudit premier réseau de neurones (EQL) et/ou au moins une valeur de pondération associée à un dit taux d'apprentissage.

9. Procédé selon l'une quelconque des revendications 7 ou 8 comprenant en outre une fourniture (E130) au premier réseau de neurones (EQL) de valeurs initiales des paramètres (P1(t)) du premier réseau devant être adaptés.

10. Procédé selon l'une quelconque des revendications 1 à 9 dans lequel ledit deuxième réseau de neurones (FRZ) est entrainé (E070) par :
- des valeurs (H0, H1) des caractéristiques dudit canal avant et après une évolution ; et
- des paramètres dudit premier réseau de neurones (EQL) avant et après l'évolution et/ou des signaux de sortie (x1(t)) du traitement associés auxdites valeurs des caractéristiques du canal.

11. Procédé selon l'une quelconque des revendications 1 à 9 dans lequel ledit deuxième réseau de neurones (FRZ) est entrainé (E070) par :
- des valeurs (Hi, Hi+1) des caractéristiques dudit canal avant et après une évolution, le premier réseau de neurones étant entrainé pour les caractéristiques du canal avant l'évolution (Hi) ;
- envoi au premier réseau de neurones d'informations (M21) identifiant les paramètres, déterminés de façon aléatoire, à geler et à adapter ;
- réception d'informations sur la qualité du traitement du premier réseau de neurones après adaptation de ses paramètres selon les informations (M21) fournies ;
- évaluation de l'influence des informations (M21) fournies pour déterminer de nouvelles information à fournir.

12. Procédé selon l'une quelconque des revendications 10 et 11 selon lequel le deuxième réseau de neurones (FRZ) reçoit, en association avec les informations (Hi, Hi+1) sur l'évolution du canal, au moins un paramètre du premier réseau de neurones parmi un poids et un biais, et/ou une valeur d'une fonction de perte et/ou au moins une composante d'un gradient de la fonction de perte.

13. Procédé selon la revendication 12 selon lequel le deuxième réseau de neurones (FRZ) utilise une technique de rétro propagation du gradient pour son apprentissage (E070).

14. Procédé selon l'une quelconque des revendications 1 à 9 selon lequel le premier réseau de neurones (EQL) est entraîné (E20) par exploitation de signaux reçus (y(t)) correspondant à une séquence d'apprentissage (seq1) émise par un terminal (UE), une première mise à jour des paramètres (P1(t)) du premier réseau de neurones (EQL) étant effectuée lors de cet entraînement.

15. Procédé selon la revendication 14 selon lequel les paramètres (P1(t)) du premier réseau de neurones (EQL) sont mis à jour de manière itérative par rétro-propagation d'un gradient en minimisant une fonction de coût basée sur une qualité de la reconstruction à l'issu du traitement par le premier réseau de neurones de la séquence d'apprentissage (seq1).

16. Procédé selon l'une quelconque des revendications 1 à 10 dans lequel le traitement est une fonction prise parmi :
- une fonction d'égalisation,
- une fonction de traitement de signal effectuant au moins une dérive temporelle ou fréquentielle pour conserver une synchronisation temporelle et/ou fréquentielle entre un émetteur et un récepteur.

17. Programme d'ordinateur (Prog) comprenant des instructions qui, lorsque le programme est exécuté par un ordinateur, conduisent celui-ci à mettre en œuvre les étapes du procédé selon l'une quelconque des revendications 1 à 6 ou 7 à 16**.**

18. Support d'enregistrement (9) lisible par ordinateur comprenant des instructions qui, lorsqu'elles sont exécutées par un ordinateur, conduisent celui-ci à mettre en œuvre les étapes du procédé selon l'une quelconque des revendications 1 à 6 ou 7 à 16**.**

19. Dispositif (D1, UE, D2, DC) configuré pour adapter des paramètres d'un premier réseau de neurones (EQL) selon un procédé conforme à l'une quelconque des revendications 1 à 6, ou pour déterminer des paramètres du premier réseau à geler ou à adapter, selon un procédé conforme l'une quelconque des revendications 7 à 16.

20. Système (SYS) d'adaptation des paramètres d'un premier réseau de neurones (CNR), ledit système comportant :
- au moins un premier dispositif (D1, UE) configuré pour adapter des paramètres d'un premier réseau de neurones (EQL) selon un procédé conforme à l'une quelconque des revendications 1 à 6 ; et
- un deuxième dispositif (D2, DC) configuré pour déterminer des paramètres du premier réseau à geler ou à adapter, selon un procédé conforme à l'une quelconque des revendications 7 à 16 ;
le deuxième dispositif ayant une capacité de calcul plus élevée que celle dudit au moins un premier dispositif.

21. Système selon la revendication 20 dans lequel ledit au moins un premier dispositif est une station de base (D1) ou un terminal (UE) et ledit deuxième dispositif est un serveur (DC) d'un cœur dudit réseau de communication (NET).

## Patentansprüche

1. Verfahren, das von einem Computer durchgeführt wird, zur Anpassung der Parameter eines ersten neuronalen Netzes (EQL), das in einem Kommunikationsnetz (NET) verwendet wird, um eine Verarbeitung eines Eingangssignals (y(t)), das nach Übertragung eines von einem Endgerät (UE) gesendeten Signals über einen Kommunikationskanal empfangen wird, durch eine Einrichtung (BS) durchzuführen und ein Ausgangssignal (x(t)) zu erhalten, wobei die Parameter des ersten neuronalen Netzes von Ausbreitungsmerkmalen des Kommunikationskanals abhängen, wobei das erste neuronale Netz (EQL) für Ausgangswerte von Ausbreitungsmerkmalen des Kommunikationskanals trainiert worden ist (E020), wobei das Verfahren umfasst:
- nach einer Detektion (E090) einer Verschlechterung einer Qualität der Verarbeitung aufgrund einer Änderung des Kanals, Senden (E100) von Informationen (M12) über die Änderung durch das erste neuronale Netz an das zweite neuronale Netz (FRZ), wobei das zweite neuronale Netz (FRZ) dazu trainiert worden ist (E070), eine Entsprechung zwischen einer Änderung des Kanals und der Anpassung der Parameter des ersten Netzes zu erstellen, und wobei es dazu verwendet wird, infolge einer Änderung des Kanals einzufrierende Parameter des ersten Netzes (EQL) und anzupassende Parameter des ersten Netzes (EQL) zu bestimmen;
- Empfangen (E140) von Informationen (M21), die von dem zweiten neuronalen Netz (FRZ) bereitgestellt werden und infolge der detektierten Änderung einzufrierende Parameter des ersten Netzes (EQL) und anzupassende Parameter des ersten Netzes (EQL) identifizieren; und
- Anpassen (E150) der identifizierten Parameter (P1(t)) des ersten neuronalen Netzes (EQL) unter Verwendung der von dem zweiten neuronalen Netz (FRZ) bereitgestellten Informationen.

2. Verfahren nach Anspruch 1, umfassend ferner ein Senden (E100), in Verbindung mit den Informationen (M12) über die Änderung, mindestens eines Parameters des ersten neuronalen Netzes (EQL) unter einer Gewichtung und einem Bias und/oder einem Wert einer Verlustfunktion und/oder mindestens einer Komponente eines Gradienten der Verlustfunktion.

3. Verfahren nach einem der Ansprüche 1 oder 2, bei dem die Informationen (M12) über die Änderung beinhalten:
- Werte (H0) von Ausbreitungsmerkmalen des Kanals vor der Änderung, für die das erste neuronale Netz (EQL) optimiert ist; und
- geschätzte Werte (H1) dieser Merkmale infolge der Änderung.

4. Verfahren nach einem der Ansprüche 1 bis 3, bei dem die Informationen (M12) über die Änderung eine komplexe Differenz zwischen Werten von Ausbreitungsmerkmalen auf dem Kanal vor der Änderung und geschätzten Werten dieser Merkmale nach der Änderung beinhalten.

5. Verfahren nach einem der Ansprüche 1 bis 4, bei dem das Detektieren (E090) einer Verschlechterung einer Qualität der Verarbeitung aufgrund einer Änderung des Kanals beinhaltet:
- ein Vergleichen zwischen einem Schwellenwert und einem Wert einer Schwankung eines Ausbreitungsmerkmals des empfangenen Eingangssignals; und/oder
- ein Vergleichen, für ein gegebenes Eingangssignal, zwischen einem durch die Verarbeitung erhaltenen Ausgangssignal und einem Referenzsignal.

6. Verfahren nach einem der Ansprüche 1 bis 5, das vor der Anpassung (E150) eine Modifizierung der von dem zweiten neuronalen Netz (FRZ) bereitgestellten und bei der Anpassung verwendeten Informationen umfasst.

7. Verfahren, das von einem Computer durchgeführt wird, zur Bestimmung von einzufrierenden oder anzupassenden Parametern eines ersten neuronalen Netzes (EQL), wobei das erste neuronale Netz (EQL) in einem Kommunikationsnetz (NET) verwendet wird, um eine Verarbeitung eines Eingangssignals (y(t)), das nach Übertragung eines von einem Endgerät (UE) gesendeten Signals über einen Kommunikationskanal empfangen wird, durch eine Einrichtung (BS) durchzuführen und ein Ausgangssignal (x(t)) zu erhalten, wobei die Parameter des ersten neuronalen Netzes von Ausbreitungsmerkmalen des Kommunikationskanals abhängen, wobei das erste neuronale Netz (EQL) für Ausgangswerte von Ausbreitungsmerkmalen des Kommunikationskanals trainiert worden ist (E020), wobei das Verfahren umfasst:
- Einlernen (E070) eines zweiten neuronalen Netzes (FRZ), um eine Entsprechung zwischen einer Änderung des Kanals und der Anpassung der Parameter des ersten Netzes zu erstellen;
- Empfangen (E110) von Informationen (M12) über eine Änderung des Kanals, die zu einer Verschlechterung einer Qualität der Verarbeitung führt, durch das zweite neuronale Netz (FRZ);
- Bestimmen (E120) der infolge der Änderung einzufrierenden Parameter des ersten Netzes (EQL) und anzupassenden Parameter des ersten Netzes (EQL) durch das zweite neuronale Netz (FRZ) ausgehend von den empfangenen Informationen (M12); und
- Senden (E130) von Informationen (M21), welche die einzufrierenden Parameter und die anzupassenden Parameter identifizieren, an das erste neuronale Netz (EQL) .

8. Verfahren nach Anspruch 7, bei dem die Informationen (M21), welche die einzufrierenden Parameter und die anzupassenden Parameter identifizieren, mindestens eine Lernrate eines Parameters (P1) des ersten neuronalen Netzes (EQL) und/oder mindestens einen der Lernrate zugeordneten Gewichtungswert beinhalten.

9. Verfahren nach einem der Ansprüche 7 oder 8, das ferner ein Bereitstellen (E130) von Ausgangswerten der Parameter (P1(t)) des ersten Netzes, die angepasst werden müssen, für das erste neuronale Netz (EQL) umfasst.

10. Verfahren nach einem der Ansprüche 1 bis 9, wobei das zweite neuronale Netz (FRZ) trainiert wird (E070) durch:
- Werte (H0, H1) der Merkmale des Kanals vor und nach einer Änderung; und
- Parameter des ersten neuronalen Netzes (EQL) vor und nach der Änderung und/oder Ausgangssignale (x1(t)) der Verarbeitung, die den Werten der Merkmale des Kanals zugeordnet sind.

11. Verfahren nach einem der Ansprüche 1 bis 9, wobei das zweite neuronale Netz (FRZ) trainiert wird (E070) durch:
- Werte (Hi, Hi+1) der Merkmale des Kanals vor und nach einer Änderung, wobei das erste neuronale Netz für die Merkmale des Kanals vor der Änderung (Hi) trainiert ist;
- Senden von Informationen (M21), welche die zufällig bestimmten einzufrierenden und anzupassenden Parameter identifizieren, an das erste neuronale Netz;
- Empfangen von Informationen über die Qualität der Verarbeitung des ersten neuronalen Netzes nach Anpassung seiner Parameter gemäß den bereitgestellten Informationen (M21);
- Evaluieren des Einflusses der bereitgestellten Informationen (M21), um weitere bereitzustellende Informationen zu bestimmen.

12. Verfahren nach einem der Ansprüche 10 und 11, bei dem das zweite neuronale Netz (FRZ), in Verbindung mit den Informationen (Hi, Hi+1) über die Änderung des Kanals, mindestens einen Parameters des ersten neuronalen Netzes unter einer Gewichtung und einem Bias und/oder einem Wert einer Verlustfunktion und/oder mindestens einer Komponente eines Gradienten der Verlustfunktion empfängt.

13. Verfahren nach Anspruch 12, bei dem das zweite neuronale Netz (FRZ) zu seinem Einlernen (E070) eine Technik zur Backpropagation des Gradienten verwendet.

14. Verfahren nach einem der Ansprüche 1 bis 9, bei dem das erste neuronale Netz (EQL) durch Auswertung von empfangenen Signalen (y(t)) trainiert wird (E20), die einer von einem Endgerät (UE) gesendeten Einlernsequenz (seq1) entsprechen, wobei eine erste Aktualisierung der Parameter (P1(t)) des ersten neuronalen Netzes (EQL) bei diesem Trainieren vorgenommen wird.

15. Verfahren nach Anspruch 14, bei dem die Parameter (P1(t)) des ersten neuronalen Netzes (EQL) iterativ durch Backpropagation eines Gradienten aktualisiert werden, indem eine Kostenfunktion minimiert wird, die auf einer Qualität der Rekonstruktion nach Beendigung der Verarbeitung der Einlernsequenz (seq1) durch das erste neuronale Netz basiert.

16. Verfahren nach einem der Ansprüche 1 bis 10, wobei die Verarbeitung eine Funktion ist, die gewählt ist unter:
- einer Egalisierungsfunktion,
- einer Signalverarbeitungsfunktion, die mindestens eine Zeit- oder Frequenzverschiebung vornimmt, um eine Zeit- und/oder Frequenzsynchronisation zwischen einem Sender und einem Empfänger beizubehalten.

17. Computerprogramm (Prog), das Anweisungen umfasst, die, wenn das Programm von einem Computer ausgeführt wird, diesen dazu veranlassen, die Schritte des Verfahrens nach einem der Ansprüche 1 bis 6 oder 7 bis 16 durchzuführen.

18. Computerlesbares Speichermedium (9), das Anweisungen umfasst, die, wenn sie von einem Computer ausgeführt werden, diesen veranlassen, die Schritte des Verfahrens nach einem der Ansprüche 1 bis 6 oder 7 bis 16 durchzuführen.

19. Vorrichtung (D1, UE, D2, DC), die dazu ausgestaltet ist, Parameter eines ersten neuronalen Netzes (EQL) gemäß einem Verfahren nach einem der Ansprüche 1 bis 6 anzupassen oder einzufrierende oder anzupassende Parameter des ersten Netzes gemäß einem Verfahren nach einem der Ansprüche 7 bis 16 zu bestimmen.

20. System (SYS) zur Anpassung der Parameter eines ersten neuronalen Netzes (CNR), wobei das System beinhaltet:
- mindestens eine erste Vorrichtung (D1, UE), die dazu ausgestaltet ist, Parameter eines ersten neuronalen Netzes (EQL) gemäß einem Verfahren nach einem der Ansprüche 1 bis 6 anzupassen; und
- eine zweite Vorrichtung (D2, DC), die dazu ausgestaltet ist, einzufrierende oder anzupassende Parameter des ersten Netzes gemäß einem Verfahren nach einem der Ansprüche 7 bis 16 zu bestimmen;
wobei die zweite Vorrichtung eine Rechenleistung hat, die höher als die der mindestens einen ersten Vorrichtung ist.

21. System nach Anspruch 20, wobei die mindestens eine erste Vorrichtung eine Basisstation (D1) oder ein Endgerät (UE) ist und die zweite Vorrichtung ein Server (DC) eines Kerns des Kommunikationsnetzes (NET) ist.

## Claims

1. Computer-implemented method for adapting the parameters of a first neural network (EQL) used in a communication network (NET) to perform processing, by way of an equipment (BS), of a signal at the input (y(t)) received after transmission, by a communication channel, of a signal transmitted by a terminal (UE) and to obtain a signal at the output (x(t)), the parameters of the first neural network depending on propagation characteristics of the communication channel, said first neural network (EQL) having been trained (E020) for initial values of propagation characteristics of the communication channel, said method comprising:
- as a result of detection (E090) of a deterioration in a quality of the processing owing to a change in said channel, sending (E100), by way of the first neural network, information (M12) about said change to the second neural network (FRZ), said second neural network (FRZ) having been trained (E070) to establish a correspondence between a change in the channel and the adaptation of the parameters of the first network and being used to determine parameters of said first network (EQL) to freeze and parameters of said first network (EQL) to adapt as a result of a change in the channel;
- receiving (E140) information (M21), supplied by said second neural network (FRZ), that identifies parameters of said first network (EQL) to freeze and parameters of the first network (EQL) to adapt as a result of the detected change; and
- adapting (E150) the identified parameters (P1(t)) of said first neural network (EQL) using the information supplied by said second neural network (FRZ).

2. Method according to Claim 1, further comprising sending (E100), together with the information (M12) about said change, at least one parameter of said first neural network (EQL) from among a weight and a bias, and/or a value of a loss function and/or at least one component of a gradient of the loss function.

3. Method according to either one of Claims 1 and 2, according to which the information (M12) about said change includes:
- values (H0) of propagation characteristics of the channel before the change, for which propagation characteristics said first neural network (EQL) is optimized; and
- estimated values (H1) of these characteristics as a result of the change.

4. Method according to any one of Claims 1 to 3, according to which the information (M12) about said change includes a complex difference between values of propagation characteristics on said channel before the change and estimated values of these characteristics after the change.

5. Method according to any one of Claims 1 to 4, according to which the detection (E090) of a deterioration in a quality of the processing owing to a change in the channel includes:
- a comparison between a threshold and a value of a variation in a propagation characteristic of the received input signal; and/or
- a comparison, for a given input signal, between a signal at the output obtained by way of the processing and a reference signal.

6. Method according to any one of Claims 1 to 5, comprising, before said adaptation (E150), modifying the information supplied by said second neural network (FRZ) and used for said adaptation.

7. Computer-implemented method for determining parameters of a first neural network (EQL) to freeze or to adapt, said first neural network (EQL) being used in a communication network (NET) to perform processing, by way of an equipment (BS), of a signal at the input (y(t)) received after transmission, by a communication channel, of a signal transmitted by a terminal (UE) and to obtain a signal at the output (x(t)), the parameters of the first neural network depending on propagation characteristics of the communication channel, said first neural network (EQL) having been trained (E020) for initial values of propagation characteristics of the communication channel, said method comprising:
- a second neural network (FRZ) learning (E070) to establish a correspondence between a change in the channel and the adaptation of the parameters of the first network;
- receiving (E110), by way of the second neural network (FRZ), information (M12) about a change in said channel resulting in a deterioration in a quality of the processing;
- determining (E120), by way of said second neural network (FRZ), from the received information (M12), parameters of said first network (EQL) to freeze and parameters of said first network (EQL) to adapt as a result of said change; and
- sending (E130) the first neural network (EQL) information (M21) that identifies the parameters to freeze and the parameters to adapt.

8. Method according to Claim 7, according to which said information (M21) that identifies the parameters to freeze and the parameters to adapt includes at least one learning rate of said first neural network (EQL) for learning a parameter (P1) and/or at least one weighting value associated with an aforementioned learning rate.

9. Method according to either one of Claims 7 and 8, further comprising supplying (E130) the first neural network (EQL) with initial values of the parameters (P1(t)) of the first network that need to be adapted.

10. Method according to any one of Claims 1 to 9, wherein said second neural network (FRZ) is trained (E070) by:
- values (H0, H1) of the characteristics of said channel before and after a change; and
- parameters of said first neural network (EQL) before and after the change and/or output signals (x1(t)) of the processing that are associated with said values of the characteristics of the channel.

11. Method according to any one of Claims 1 to 9, wherein said second neural network (FRZ) is trained (E070) by:
- values (Hi, Hi+1) of the characteristics of said channel before and after a change, the first neural network being trained for the characteristics of the channel before the change (Hi);
- sending the first neural network information (M21) that identifies the, randomly determined, parameters to freeze and to adapt;
- receiving information about the quality of the processing of the first neural network after adaptation of its parameters according to the supplied information (M21) ;
- evaluating the influence of the supplied information (M21) in order to determine new information to be supplied.

12. Method according to either one of Claims 10 and 11, according to which the second neural network (FRZ) receives, together with the information (Hi, Hi+1) about the change in the channel, at least one parameter of the first neural network from among a weight and a bias, and/or a value of a loss function and/or at least one component of a gradient of the loss function.

13. Method according to Claim 12, according to which the second neural network (FRZ) uses a gradient backpropagation technique for its learning (E070).

14. Method according to any one of Claims 1 to 9, according to which the first neural network (EQL) is trained (E20) by utilizing received signals (y(t)) corresponding to a learning sequence (seq1) transmitted by a terminal (UE), a first update of the parameters (P1(t)) of the first neural network (EQL) being carried out during this training.

15. Method according to Claim 14, according to which the parameters (P1(t)) of the first neural network (EQL) are iteratively updated by backpropagating a gradient while minimizing a cost function based on a quality of the reconstruction of the learning sequence (seq1) at the end of the processing by the first neural network.

16. Method according to any one of Claims 1 to 10, wherein the processing is a function taken from among:
- an equalization function,
- a signal processing function producing at least one time or frequency drift in order to maintain a time and/or frequency synchronization between a transmitter and a receiver.

17. Computer program (Prog) comprising instructions that, when the program is executed by a computer, cause said computer to perform the steps of the method according to any one of Claims 1 to 6 or 7 to 16.

18. Computer-readable recording medium (9) comprising instructions that, when executed by a computer, cause said computer to perform the steps of the method according to any one of Claims 1 to 6 or 7 to 16.

19. Device (D1, UE, D2, DC) configured to adapt parameters of a first neural network (EQL) according to a method consistent with any one of Claims 1 to 6, or to determine parameters of the first network to freeze or to adapt, according to a method consistent with any one of Claims 7 to 16.

20. System (SYS) for adapting the parameters of a first neural network (CNR), said system including:
- at least one first device (D1, UE) configured to adapt parameters of a first neural network (EQL) according to a method consistent with any one of Claims 1 to 6; and
- a second device (D2, DC) configured to determine parameters of the first network to freeze or to adapt, according to a method consistent with any one of Claims 7 to 16;
the second device having a higher computing capacity than that of said at least one first device.

21. System according to Claim 20, wherein said at least one first device is a base station (D1) or a terminal (UE) and said second device is a server (DC) of a core of said communication network (NET).
